# FASCICULE DE BREVET EUROPEEN

(11) **EP 3 870 531 B1**
(45) Date de publication et mention de la délivrance du brevet: **25.12.2024**
(21) Numéro de dépôt: 19798133.5
(22) Date de dépôt: 24.10.2019
(51) Int. Cl.: B66F 11/04, B66F 17/00, G01G 19/08

(54) **SYSTEME DE PESAGE POUR PLATE-FORME DE TRAVAIL D'UNE NACELLE ELEVATRICE A MAT**
WÄGESYSTEM FÜR EINE ARBEITSPLATTFORM EINER LUFTSEILBAHN MIT EINEM MAST
WEIGHING SYSTEM FOR THE WORK PLATFORM OF AN AERIAL WORK PLATFORM WITH A MAST

(30) Priorité: 26.10.2018 FR 1859975; 29.10.2018 FR 1860021
(43) Date de publication de la demande: 01.09.2021
(73) Titulaire: Haulotte Group, 42420 Lorette (FR)
(72) Inventeur: DEVAUX, Christian, 42170 Saint-Just-Saint-Rambert (FR)
(74) Mandataire: Reinhardt, Yves
(86) Numéro de dépôt international: PCT/IB2019/059125
(87) Numéro de publication internationale: WO 2020/084561

(56) Documents cités:
- EP-B1- 1 382 562
- WO-A1-99/11557
- CN-A- 106 006 504
- FR-A1- 2 808 791

## Description

La présente invention concerne le domaine des plates-formes élévatrices mobiles de personnel (désignées aussi par l'acronyme PEMP, ou encore en anglais par *mobile elevating work platforms* et son abbréviation *MEWP*) encore communément appelées nacelles élévatrices (ou en anglais *aerial work platforms* ou son abréviation *AWP*)*.* Elle concerne plus particulièrement les nacelles élévatrices qui comprennent un mat supportant la plate-forme de travail de la nacelle élévatrice.

Les nacelles élévatrices sont des machines destinées à permettre à une ou plusieurs personnes de travailler en hauteur. Pour cela, elles comprennent une plate-forme de travail prévue pour recevoir les personnes. La plate-forme de travail est supportée par une structure élévatrice qui permet de l'élever depuis une position abaissée sur le châssis de la nacelle élévatrice jusqu'à la position de travail souhaitée en hauteur. La structure de levage est souvent agencée sur une tourelle qui est montée pivotante sur le châssis, ce qui permet de changer l'orientation du mécanisme de levage - et donc de la plate-forme - par rapport au châssis. Enfin, le châssis est généralement équipé de roues ou chenilles permettant de déplacer la nacelle élévatrice au sol. Il est le plus souvent motorisé pour permettre un déplacement au sol autonome de la nacelle élévatrice. La plate-forme de travail est habituellement équipée d'un poste de commande permettant à un opérateur à bord de la plate-forme de provoquer son déplacement pour atteindre la position de travail souhaitée.

Chaque modèle de nacelle élévatrice est conçu pour supporter une charge maximale à ne pas dépasser afin d'éviter des risques d'accidents, par exemple pour éviter que la nacelle élévatrice ne verse. De ce fait, il est souhaitable d'équiper la nacelle élévatrice d'un système de pesage permettant de déterminer la charge à bord de la nacelle élévatrice afin de limiter ou empêcher le levage de la plate-forme ou le déplacement de la nacelle élévatrice au sol. Et les évolutions normatives contemporaines rendent obligatoires la présence d'un tel système de pesage pour certaines catégories de nacelles élévatrices et imposent un certain degré de précision de la mesure réalisée.

Aujourd'hui, il s'avère qu'il n'existe pas de système de pesage satisfaisant pour les nacelles élévatrices à mâts verticaux, tout particulièrement celles du type supportant directement la plate-forme de travail.

Une nacelle élévatrice à mât vertical est une nacelle élévatrice dont la structure élévatrice comprend un mât fixe vertical qui supporte la plate-forme de travail, c'est-à-dire que le mât s'étend verticalement par rapport au châssis sans possibilité de modifier son angle par rapport au châssis. Le mât est extensible verticalement généralement au moyen d'une pluralité de caissons qui s'emboitent et coulissent entre eux en direction verticale. Elles ont habituellement un poids compris entre 800 et 1200 kg et une hauteur maximale de levage de l'ordre de 6 à 10 m.

Dans le cas des nacelles élévatrices à mâts verticaux supportant directement la plate-forme de travail, cette dernière est montée directement au dernier caisson du mât vertical que la plate-forme de travail vient généralement entourer partiellement, au contraire des nacelles élévatrices à mâts verticaux supportant la plate-forme de travail par le biais d'un bras pendulaire monté par une extrémité au dernier caisson du mât vertical et supportant la plate-forme de travail par son autre extrémité. Un exemple de nacelle élévatrice de ce dernier type est divulgué par FR 2 808 791 A1 qui correspond au préambule de la revendication 1.

Pour les nacelles élévatrices à mâts verticaux, il est possible d'estimer la charge en mesurant la pression dans le vérin de levage du mât. Cependant la précision de mesure est médiocre en raison des frottements entre les caissons du mât et aussi du fait de l'utilisation d'un vérin de levage multicorps, c'est-à-dire qui correspond en fait à plusieurs vérins reliés entre eux et pour lesquels il s'avère que l'évolution de la pression dans les différents vérins est différente d'un vérin à l'autre et variable par exemple selon l'emplacement de la charge sur la plate-forme de travail.

A ce jour, des systèmes de pesage de la charge à bord de la plate-forme de travail ont été avant tout développés pour les nacelles élévatrices dotées d'un mât télescopique inclinable par rapport au châssis. Ce type de nacelle élévatrice pèse habituellement entre 6 à 22 tonnes pour une hauteur de levage maximale comprise habituellement entre 12 et 42 m.

Une première approche consiste à supporter la plate-forme de travail par le biais de quatre capteurs d'efforts montés sur un châssis rigide et positionnés près des angles de la plate-forme de travail, le châssis rigide étant supporté par la structure élévatrice. Cette approche est illustrée par exemple par CN 106006504 A. Mais un tel châssis rigide a une masse significative, ce qui rend cette solution peu appropriée à des machines légères telles qu'une nacelle élévatrice à mât vertical, notamment en raison du risque accru de versement. De plus, dans CN 106006504 A, le garde-corps est monté directement sur le châssis rigide de sorte que le système de pesage ne prend pas en compte les charges éventuellement accrochés ou posés par les utilisateurs sur le garde-corps.

Dans une deuxième approche, un système de pesage est positionné latéralement entre la plateforme et la structure élévatrice. Il comprend un dispositif mécanique par l'intermédiaire duquel la structure élévatrice supporte la plate-forme de travail et auquel est associé un capteur d'effort. Le dispositif mécanique est conçu pour dissocier le poids de la plate-forme de travail et les moments qui résultent du positionnement en porte-à-faux de la plate-forme de travail de manière que le capteur d'efforts soit soumis exclusivement au poids de la plate-forme de travail et ne mesurent donc que ce dernier. Cette approche est divulguée par EP 1 382 562 B1 où le dispositif mécanique est un corps d'épreuve métallique muni d'un capteur d'efforts à base de jauges de contraintes. Elle est également divulguée par WO 2017/177219 où le dispositif mécanique est sous la forme d'un parallélogramme articulé.

Ces systèmes selon la deuxième approche sont peu adaptés à être mis en oeuvre dans des nacelles élévatrices à mât verticaux, et encore moins dans celles du type où le mat vertical supporte directement la plate-forme de travail.

En effet, le dispositif mécanique est lourd, ce qui rend ces systèmes de pesage peu appropriés à des machines légères telles qu'une nacelle élévatrice à mât vertical, notamment en raison du risque accru de versement.

De plus, le placement latéral du système de pesage entre la structure élévatrice et la plate-forme de travail n'est pas facilement adaptable à une nacelle élévatrice à mât vertical supportant directement la plate-forme de travail du fait que le mât vertical supporte la plate-forme de travail par le dessous.

Mais même dans le cas où il est aussi prévu de disposer le système de pesage sous la plate-forme de travail comme c'est le cas de EP 1 382 562 B1, l'encombrement important du dispositif mécanique a pour inconvénient d'augmenter celui de la nacelle élévatrice, surtout sa hauteur à l'état abaissé, ce qui est préjudiciable à la fois pour le transport de la nacelle élévatrice et pour la facilité d'accès de l'utilisateur à la plate-forme de travail.

Cette deuxième approche est aussi proposée par CN 106430020 A dans une version plus simple dans lequel le dispositif mécanique comprend deux cadres repoussés par des ressorts disposés entre eux et un interrupteur de position mécanique fonctionnant en tout ou rien et actionné par l'un des cadres en cas de dépassement d'un seuil. Mais ce système cumule tous les inconvénients précédents tout en étant moins précis, en présentant un risque de grippage et en ne permettant pas une mesure continue de la charge à bord de la plate-forme de travail.

Il existe donc un besoin pour un système de pesage de la charge à bord de la plate-forme de travail qui soit mieux adapté à être mis en oeuvre dans des nacelles élévatrices à mâts verticaux, en particulier celles du type dont le mât vertical supporte directement la plate-forme de travail.

Le but de la présente invention est de fournir une technologie de pesage pour nacelle élévatrice qui soit mieux adaptée à être mise en oeuvre dans des nacelles élévatrices à mâts verticaux, mais qui puisse éventuellement aussi être utilisée pour d'autres types de nacelles élévatrices.

A cette fin, la présente invention propose une nacelle élévatrice, comprenant :
- une plate-forme de travail comprenant un plancher et un garde-corps,
- une structure élévatrice pour déplacer en hauteur la plate-forme de travail, la structure élévatrice comprenant un mât extensible par le biais duquel est supportée la plate-forme de travail, la structure élévatrice supportant la plate-forme de travail uniquement par un côté de la plate-forme de travail, et
- au moins trois capteurs d'effort interposés entre la structure élévatrice et la plate-forme de travail par le biais desquels la structure élévatrice supporte intégralement le poids de la plate-forme de travail,
dans lequel :
- les capteurs d'efforts sont agencés dans une relation spatiale fixe entre eux,
- les capteurs d'effort sont disposés de manière que, en projection orthogonale sur un plan correspondant au plancher de la plate-forme de travail, les capteurs d'effort soient tous situés d'un même côté d'une ligne médiane du plancher de la plate-forme de travail qui est celui situé vers le côté de la plate-forme de travail par lequel elle est supportée par la structure élévatrice,
- chacun des capteurs d'effort est prévu pour mesurer l'effort exercé sur lui uniquement dans la direction verticale par la plate-forme de travail lorsque le plancher de la plate-forme de travail s'étend horizontalement. Autrement dit, chacun des capteurs d'effort est prévu pour mesurer l'effort exercé sur lui uniquement dans la direction perpendiculaire au plancher de la plate-forme de travail.

Dans l'invention, la plate-forme de travail est donc montée en porte-à-faux par rapport à la structure élévatrice et aux capteurs d'effort. Les capteurs d'effort sont donc soumis à la fois au poids de la plate-forme de travail, y compris la charge à son bord, ainsi qu'aux efforts résultants des moments qui apparaissent du fait du montage en porte-à-faux, contrairement à la première et à la deuxième approche de l'art antérieur où le ou les capteurs d'effort ne sont soumis qu'au poids. Mais du fait que les capteurs d'effort sont prévus pour mesurer l'effort exercé sur eux uniquement dans la direction verticale par la plate-forme de travail lorsque le plancher de la plate-forme de travail s'étend horizontalement, le poids de la plate-forme de travail incluant la charge à bord, est néanmoins aisément déterminable avec une précision satisfaisante en effectuant l'addition des mesures algébriques fournies par les capteurs d'effort. L'on comprendra que les capteurs d'effort sont interposés entre la structure élévatrice et la plate-forme de travail en étant répartie spatialement de manière à être soumis chacun à un effort propre par la plate-forme de travail.

L'invention est avantageuse par rapport à l'art antérieur pour plusieurs raisons. Comparé à la première approche de l'art antérieur, les capteurs d'effort occupent une région nettement plus petite qui est située du côté de la plate-forme de travail par lequel elle est supportée. De ce fait, les capteurs d'effort peuvent être supportés par une structure plus petite, et donc aussi moins lourde.

Comparativement à la deuxième approche, l'invention dispense d'utiliser un dispositif mécanique lourd et encombrant pour dissocier le poids de la plate-forme de travail et les moments résultant de son montage en porte-à-faux afin de soumettre le capteur d'effort qu'au poids.

Suivant des modes de réalisation préférés, l'invention comprend une ou plusieurs des caractéristiques suivantes :
- les capteurs d'effort ont chacun une interface de support propre pour supporter la plate-forme de travail ou pour être supporté par la structure élévatrice, et chacun des capteurs d'effort est prévu pour mesurer l'effort exercé uniquement dans la direction verticale par la plate-forme de travail sur son interface de support lorsque le plancher de la plate-forme de travail s'étend horizontalement ou pour mesurer l'effort exercé uniquement dans la direction verticale par son interface de support sur la structure élévatrice lorsque le plancher de la plate-forme de travail s'étend horizontalement ; en particulier, il peut être prévu que les capteurs d'effort aient chacun une interface de support propre pour supporter la plate-forme de travail, chacun des capteurs d'effort étant prévu pour mesurer l'effort exercé uniquement dans la direction verticale par la plate-forme de travail sur son interface de support lorsque le plancher de la plate-forme de travail s'étend horizontalement ;
- les capteurs d'efforts sont répartis de manière que, dans une projection orthogonale sur un plan, les interfaces de support occupent les sommets d'un polygone ;
- la structure élévatrice supporte la plate-forme de travail par le milieu d'un côté de la plate-forme de travail et les capteurs d'effort ou les interfaces de support des capteurs d'effort sont disposés de manière symétrique par rapport à un plan médian du plancher de la plate-forme de travail lequel est perpendiculaire à ladite ligne médiane ;
- l'interface de support de chaque capteur d'effort comprend une surface de support plane, les surfaces de support planes des interfaces de support des capteurs d'effort étant coplanaires ;
- l'interface de support de chaque capteur d'effort comprend une surface de support plane s'étendant parallèlement au plancher de la plate-forme de travail ou bien l'interface de support de chaque capteur d'effort comprend une surface de support plane s'étendant perpendiculairement au plancher de la plate-forme de travail ;
- les capteurs d'effort sont agencées sous le plancher ou bien, vue en projection orthogonale sur un plan correspondant au plancher de la plate-forme de travail, les capteurs d'effort sont agencés à l'extérieur du plancher ;
- au moins deux des capteurs d'effort sont à base de jauges de contraintes agencées sur ou dans un corps d'épreuve commun, l'interface de support de chacun de ces deux capteurs faisant partie du corps d'épreuve commun ;
- le corps d'épreuve commun a une forme de barreau comprenant deux extrémités longitudinales opposées, l'interface de support de l'un des deux capteurs d'effort étant agencée dans une région vers l'une des extrémités longitudinales et l'interface de support de l'autre des deux capteurs d'effort étant agencée dans une région vers l'autre extrémité longitudinale ;
- les capteurs d'effort sont au nombre de quatre ;
- les interfaces de support des quatre capteurs d'effort sont disposées, en projection orthogonale sur un plan, suivant les sommets d'un carré, d'un rectangle ou d'un trapèze isocèle ;
- deux des capteurs d'effort sont à base de jauges de contraintes agencées sur ou dans un premier corps d'épreuve commun en forme de barreau, l'interface de support de chacun de ces deux capteurs faisant parties du premier corps d'épreuve, et les deux autres capteurs d'effort sont à base de jauges de contraintes agencées sur ou dans un deuxième corps d'épreuve commun distinct du premier corps d'épreuve, les interfaces de support de chacun de ces deux autres capteurs faisant parties du deuxième corps d'épreuve ;
- le mât extensible est un mât fixe vertical, le mât étant extensible au moyen d'une pluralité de caissons qui s'emboitent et coulissent entre eux en direction verticale, le mât supportant la plate-forme de travail par le biais du caisson supérieur auquel la plate-forme de travail est montée rigidement par le biais des capteurs d'effort ;
- la partie supérieure du garde-corps est en contact coulissant contre la paroi verticale du caisson supérieur pour soutenir la plate-forme de travail ;
- le caisson supérieur du mât présente des supports en saillie sur au moins deux côtés opposés du caisson, les capteurs d'effort étant fixés sur lesdits supports ;
- le premier corps d'épreuve est fixé sur l'un des supports et le deuxième corps d'épreuve est fixé sur l'autre support ;
- lesdits supports sont horizontaux, les premier et deuxième corps d'épreuve étant placés entre le plancher de la plate-forme de travail et le support horizontal correspondant du caisson supérieur en étant couchés horizontalement entre eux ;
- le mât extensible est un mât fixe vertical, le mât étant extensible au moyen d'une pluralité de caissons qui s'emboitent et coulissent entre eux en direction verticale, le mât supportant la plate-forme de travail par le biais du caisson supérieur, la structure élévatrice comprenant en outre un bras pendulaire dont une extrémité est articulée au caisson supérieur du mât fixe vertical et une extrémité opposée supporte la plate-forme de travail ; ou bien le mât extensible est un mât inclinable par rapport à un châssis supportant la structure élévatrice, le mât comprenant optionnellement des tronçons articulées entre eux.
- la structure élévatrice supporte la plate-forme de travail par un côté étroit de la plate-forme de travail ;
- la nacelle élévatrice, comprend en outre un dispositif de traitement électronique pour déterminer la charge placée sur la plate-forme à partir des mesures d'effort fournies par les capteurs d'effort.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente une vue d'une nacelle élévatrice à mât vertical selon un mode de réalisation de l'invention, le mât vertical étant étendu au maximum.

La figure 2 représente une autre vue de la nacelle élévatrice de la figure 1, le mât vertical étant rétracté au maximum.

La figure 3 représente une vue de détail du système de pesage de la nacelle élévatrice selon le premier mode de réalisation, laquelle correspond à la zone référencée III dans la figure 2.

La figure 4 représente un des capteurs d'effort du système de pesage de la nacelle élévatrice du premier mode de réalisation.

La figure 5 est une vue de dessus de la plate-forme de travail de la nacelle élévatrice du premier mode de réalisation, laquelle montre la disposition des interfaces de support des capteurs d'effort du système de pesage.

La figure 6 illustre les efforts mesurés par les capteurs d'effort pour un cas de chargement de la plate-forme de travail de la nacelle élévatrice du premier mode de réalisation.

La figure 7 représente une vue similaire à la figure 3, mais pour une variante au premier mode de réalisation dans laquelle les deux capteurs d'effort partagent un même corps d'épreuve de manière à former un double capteur.

La figure 8 représente une vue d'un double capteur d'effort utilisé dans la variante de la figure 7.

La figure 9 représente une vue du bras pendulaire et de la plate-forme de travail d'une nacelle élévatrice selon un deuxième mode de réalisation dans lequel la structure élévatrice comprend un bras pendulaire monté par une extrémité à l'extrémité supérieure du mât extensible et supportant par son autre extrémité la plate-forme de travail.

La figure 10 représente une variante de montage des capteurs d'effort par rapport au montage illustré à la figure 9.

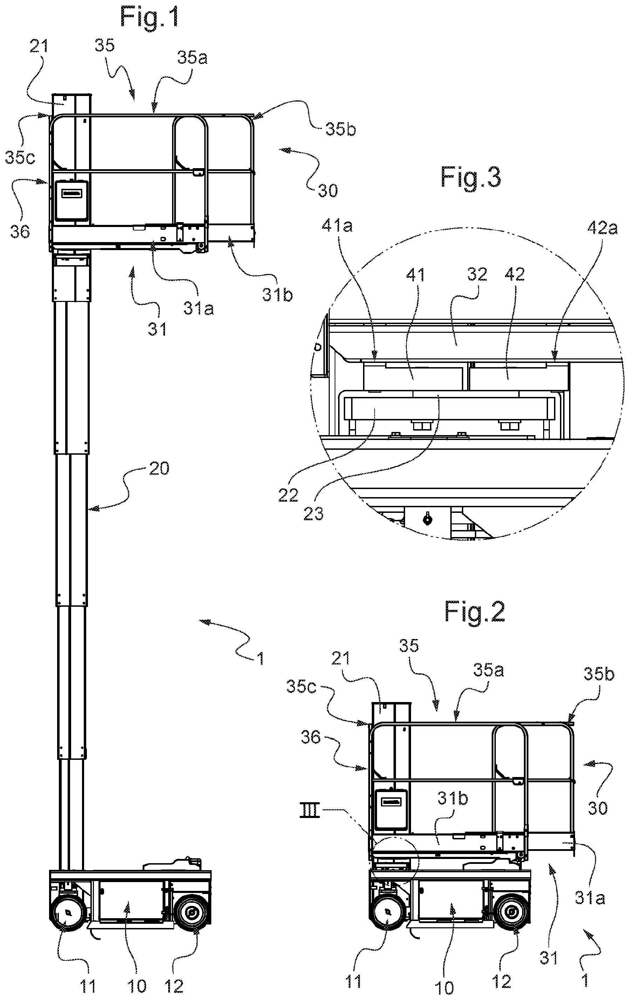

En référence aux figures 1 à 6, nous allons décrire maintenant une nacelle élévatrice 1 selon un premier mode de réalisation.

La nacelle élévatrice 1 est une nacelle élévatrice à mât fixe vertical 20 formant la structure élévatrice de la nacelle élévatrice 1, étant entendu que le mât 20 est effectivement vertical lorsque la nacelle élévatrice est placée sur un sol plat horizontal. Le mât 20 est extensible verticalement au moyen d'une pluralité de caissons qui s'emboitent et coulissent entre eux en direction verticale sous l'action d'un vérin multicorps.

La nacelle élévatrice 1 comprend un châssis 10 sur lequel est monté rigidement le mât 20, c'est-à-dire sans possibilité de rotation par rapport au châssis 10, ni possibilité de modifier son inclinaison par rapport au châssis 10. Le châssis 10 comprend des roues 11, 12 - ou en variante des chenilles - permettant la translation de la nacelle élévatrice 1 au sol. Le châssis 10 est préférentiellement motorisé pour permettre le déplacement autonome de la nacelle élévatrice 1 au sol.

La nacelle élévatrice 1 comprend une plate-forme de travail 30 qui est supportée rigidement par le mât 20, c'est-à-dire sans possibilité de déplacement de la plate-forme de travail 30 par rapport au mât 20. Pour cela, la plate-forme de travail 30 est montée rigidement au dernier caisson 21 du mât vertical 20, c'est-à-dire le caisson le plus élevé lorsque la mât 20 est étendu. La plate-forme de travail 30 comprend un plancher 31 et un garde-corps 35. Le plancher 31 s'étend perpendiculairement au mât 20, autrement dit le plancher 31 est horizontal lorsque la nacelle élévatrice 1 repose sur un sol plat horizontal.

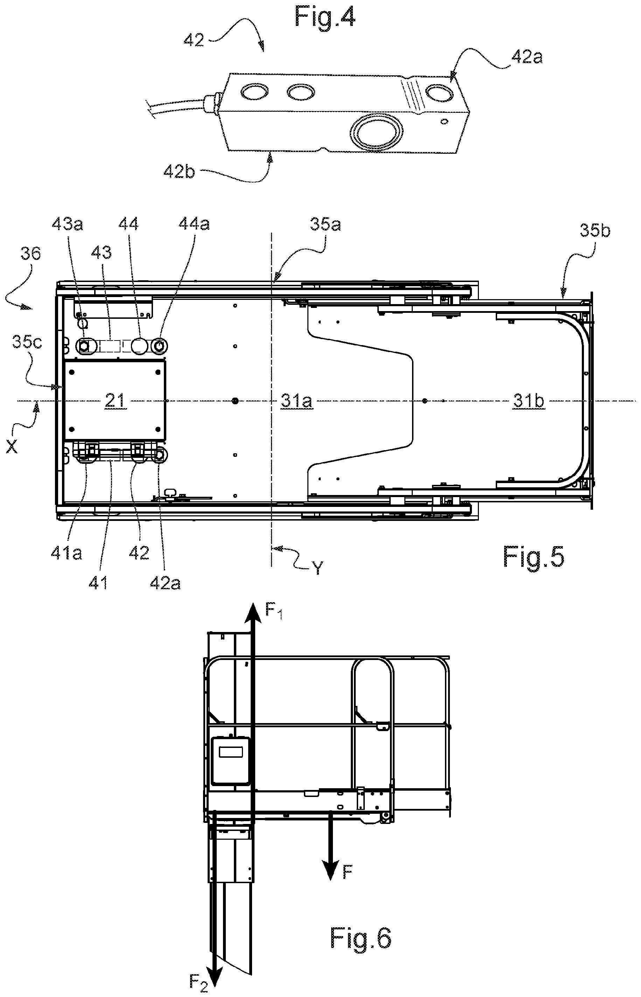

La plate-forme de travail 30 a un plan de base globalement rectangulaire - cf. figure 5 - qui correspond sensiblement au plan de base du châssis 10. Le mât 20 supporte la plate-forme de travail 30 par le milieu d'un côté étroit 36 de cette dernière qui définit conventionnellement le côté arrière de la nacelle élévatrice 1. Le caisson 21 est entouré de part et d'autre et du côté avant par la plate-forme de travail 30, tandis que le côté arrière du caisson 21 est sensiblement aligné avec le côté arrière de la plate-forme de travail 30.

La nacelle élévatrice 1 est équipée d'un système de pesage pour déterminer la charge présente sur la plate-forme de travail 30. Il comprend quatre capteurs d'effort 41, 42, 43, 44 qui sont montés entre le caisson 21 et la plate-forme de travail 30 de manière à supporter intégralement le poids de la plate-forme de travail 30.

Plus précisément, les capteurs d'effort 41 à 44 sont disposés par paire de part et d'autre du caisson 21. Ainsi, les capteurs d'effort 41, 42 sont disposés sur un premier côté latéral du caisson 21 et les capteurs d'effort 43, 44 sont disposés sur un deuxième côté latéral du caisson 21 opposé au premier.

Un premier support horizontal 22 est agencé en saillie sur le premier côté latéral du caisson 21 pour le montage des capteurs d'effort 41, 42. Il peut s'agir d'une pièce de fonderie rapportée sur le caisson 21 par exemple par soudage. Le support horizontal 22 comprend une surface supérieure 23 sur laquelle sont fixés les capteurs d'effort 41, 42 par tout moyen approprié tel que des vis. La surface 23 est préférentiellement usinée pour fournir une bonne mise en position des capteurs d'effort 41, 42. Un deuxième support horizontal - non visible sur les figures - similaire au premier est agencé sur le deuxième côté latéral du caisson 21 pour le montage des capteurs d'effort 43, 44.

Les capteurs d'effort 41 à 44 sont placés sous le plancher 31 de la plate-forme de travail 30 de manière à supporter la plate-forme de travail 30 par son plancher 31. Chacun des capteurs d'effort 41, 42, 43, 44 a une interface de support respective 41a, 42a, 43a, 44a par le biais desquels ils supportent le plancher 31 de la plate-forme de travail 30. En l'occurrence, c'est une poutre 32 de la structure formant le plancher 31 qui est fixée - par vis ou tout autre moyen approprié - sur les interfaces de support 41a, respectivement 42a, des capteurs d'effort 41, respectivement 42. De manière similaire, une autre poutre - non visible - de la structure formant le plancher 31 est fixée sur les interfaces de support 43a, respectivement 44a, des capteurs d'effort 43, respectivement 44.

Comme cela est visible sur la figure 5, les interfaces de support 41a à 44a et plus généralement les capteurs d'effort 41 à 44 sont disposés de manière symétrique par rapport à un plan médian vertical X du plancher 31 de la plate-forme de travail 30 : cf. figure 5. Une telle disposition facilite la mise en place des capteurs d'effort 41 à 44 par rapport à la structure élévatrice et répartie favorablement les efforts exercés par la plate-forme de travail sur les interfaces de support 41a à 44a des capteurs d'effort 41 à 44, compte tenu du fait que la structure élévatrice supporte la plate-forme de travail 30 par le milieu d'un côté de cette dernière par lequel passe le plan médian X. Cela permet un dimensionnement identique des capteurs d'effort 41 et 42 par rapport au capteurs d'effort 43 et 44 qui sont disposés de part et d'autre du plan médian. Cela contribue aussi à améliorer la précision de la détermination de la charge réalisée à partir de la mesure des capteurs d'effort 41 à 44.

Vue en projection orthogonale sur un plan correspondant au plancher 31, les capteurs d'effort 41a à 44a sont tous disposés du côté de la ligne médiane transversale Y du plancher 31 qui est celui situé vers le côté étroit 36 par lequel le mât 20 supporte la plate-forme de travail 30, c'est-à-dire à gauche de la ligne médiane transversale Y du plancher 31 sur la figure 5. Par conséquent, la plate-forme de travail 30 est donc monté en porte à faux par rapport aux capteurs d'effort 41 à 44 et à leurs interfaces de support 41a à 44a.

En l'occurrence, les quatre interfaces de support 41a, 42a, 43a, 44a sont disposées, en projection orthogonale sur le plan correspondant au plancher 31, suivant les sommets d'un rectangle, voire d'un carré, comme cela est visible sur la figure 5. Le positionnement des interfaces de support 41a à 44a suivant les sommets d'un rectangle ou d'un carré est commode en raison de la section transversale rectangulaire des caissons du mât 20, en particulier le caisson 21 de part et d'autre duquel les capteurs d'effort 41 à 44 sont montés. Mais les interfaces de support 41a à 44a peuvent aussi être disposés aux sommets d'un polygone autre que rectangle ou carré, par exemple ceux d'un trapèze isocèle. Le fait pour les interfaces de support 41a à 44a des capteurs d'effort 41 à 44 d'occuper les sommets d'un polygone en projection orthogonale sur un plan, procure une répartition spatiale de celles-ci fournissant un maintien stable efficace de la plate-forme de travail 30.En l'occurrence, la plate-forme de travail 30 est du type extensible, c'est-à-dire que le plancher 31 comprend une partie fixe 31a qui est rigidement montée sur les capteurs d'effort 41 à 44 et une partie coulissante 31b par rapport à la partie fixe 31a de manière à pouvoir varier la longueur de la plate-forme de travail 30. Similairement, le garde-corps 35 comprend une partie fixe montée sur la partie fixe 31a du plancher 31 et une partie coulissante 35b montée fixement sur la partie coulissante 31b du plancher 31.

On comprendra que la référence à la ligne médiane transversale Y du plancher 31 est définie dans la situation où la partie coulissante 31b est rétractée au maximum, c'est-à-dire pour laquelle la longueur de la plate-forme de travail 30 est minimale.

Dans ce premier mode de réalisation, les interfaces de support 41a à 44a comprennent chacune une surface plane parallèle au plancher 31 - c'est-à-dire horizontale comme le plancher 31 - et sont coplanaires, ce qui a l'avantage de la compacité et de la simplicité du montage des capteurs d'effort. En variante, les interfaces de support peuvent être situées dans des plans horizontaux différents.

Chacun des capteurs d'effort 41 à 44 est capable de fournir une mesure de l'effort exercée perpendiculairement sur la surface plane de son interface de support 41a à 44a.

Les capteurs d'effort 41 à 44 sont des capteurs à jauges de contrainte comprenant chacun un corps d'épreuve respectif sous forme de barreau. Le corps d'épreuve est généralement sollicité en flexion pour ce type de capteurs. Un exemple de configuration pour le capteur d'effort 42 est illustré à la figure 4. En l'occurrence, l'interface de support 42a, sur le côté supérieur du barreau, comprend la surface plane horizontale déjà mentionnée et un trou servant à fixer sur la surface plane horizontale la poutre 32 du plancher 31 au moyen d'une vis ou d'un boulon. Le barreau présente sur sa face inférieure une surface formant une interface de montage 42b munie de deux trous traversants, pour la mise en position et la fixation sur le support horizontal 22 du caisson 21. Les capteurs d'effort 41, 43 et 44 peuvent être identiques au capteur d'effort 42.

Comme cela est visible sur la figure 3, les capteurs d'effort sont placés entre la poutre 32 du plancher 31 de la plateforme de travail 30 et le support horizontal 22 correspondant du caisson 21 en étant couché horizontalement entre eux.

L'utilisation de capteurs à j auges de contrainte présentant un corps d'épreuve sous forme de barreau est avantageuse car ce type de capteurs est couramment disponible dans le commerce et ils sont économiques tout en fournissant une bonne précision. De plus, ils ont un encombrement limité dans le sens transversal du barreau, ce qui permet de limiter l'augmentation du niveau du plancher 31 par rapport au châssis 10 à l'état abaissé de la plate-forme de travail 30.

De plus, comme cela est visible sur la figure 3, la configuration des supports horizontaux 22 du caisson 21 et des poutres de la structure du plancher 31 qui servent au montage des capteurs d'effort 41 à 44 permet avantageusement un montage direct entre eux sans les capteurs d'effort 41 à 44 dans le cas où l'on ne souhaite pas équiper la nacelle élévatrice 1 d'un système de détermination de la charge de la plate-forme. Ceci peut notamment être envisagé dans le cas d'une nacelle élévatrice 1 à plate-forme de travail 30 de petite surface qui peut échapper pour cette raison à la contrainte normative d'être dotée d'un système de pesage.

En variante, il peut être recouru à tout autre type de capteurs d'effort appropriés tels que des capteurs de compression ou encore des capteurs à corps d'épreuve en S, ces derniers étant cependant plus encombrants, ou encore des capteurs à compensation électromagnétique lesquels sont cependant plus onéreux.

Les capteurs 41 à 44 peuvent être des capteurs analogiques, c'est-à-dire qui ne comportent pas d'électronique intégrée, ou au contraire des capteurs numériques, c'est-à-dire qui intègrent dans le corps d'épreuve une électronique de conditionnement des signaux de la cellule de mesure formée par les jauges de contraintes. Dans les deux cas, les capteurs comprennent une liaison électrique ou autre pour fournir en sortie les signaux de mesure du capteur à une électronique de bord de la nacelle élévatrice 1.

L'électronique de bord de la nacelle élévatrice 1 calcule la charge à bord de la plate-forme de travail 31 à partir de la somme des mesures algébriques des quatre capteurs d'effort 41 à 44 qui correspond sensiblement au poids total de la plate-forme de travail 30 chargée. En effet, la somme des mesures algébriques des quatre capteurs d'effort 41 à 44 correspond sensiblement au poids malgré le montage en porte-à-faux, et donc du fait que les capteurs d'effort 41 à 44 ne « voient » pas seulement le poids de la plate-forme de travail 30 chargée, mais aussi les efforts résultants des moments liés au poids de la plate-forme de travail 30. Cela est dû au fait que chaque capteur d'effort 41 à 44 mesure uniquement l'effort exercé sur son interface de support dans la direction verticale dès lors que la nacelle élévatrice est placée sur un sol sensiblement horizontal, ce qui est la condition habituelle d'utilisation d'une telle nacelle élévatrice.

Un exemple de mesure est illustré par la figure 6 où le poids de la plate-forme de travail 30 chargée est notée F et s'applique au centre du plancher 31. Du fait du montage en porte-à faux de la plate-forme de travail 30, les capteurs d'effort 41, 43 d'une part et les capteurs 42, 44 d'autre part sont sollicités en direction opposée, soit en traction pour les premiers et en compression pour les seconds.

Dans cet exemple, les capteurs d'effort 41, 43 sont soumis ensemble à un effort vertical F₂, chacun en supportant la moitié du fait que le poids F est centré en l'occurrence. Similairement, les capteurs d'effort 42, 44 sont soumis ensemble à un effort vertical F₁ qui est orienté en direction opposé de l'effort F₂, chacun en supportant la moitié. La somme algébrique F₁ + F2 correspond sensiblement au poids F conformément aux lois de la statique.

Par ailleurs, il peut être prévu que la partie supérieure arrière 35c de la partie fixe 35a du garde-corps 35 soit en contact coulissant contre le caisson 21 de manière à soutenir la plate-forme de travail 30, et donc limiter sa flexion en raison de son montage en porte-à-faux. Cela permet avantageusement d'adopter une structure moins rigide pour le plancher 31, et donc moins lourde. Le contact coulissant évite de perturber la détermination de la charge de la plate-forme de travail 30 à partir des mesures des capteurs d'effort 41 à 44 puisque les capteurs d'effort 41 à 44 supportent sensiblement tout le poids de la plate-forme de travail 30 chargée malgré ce contact coulissant.

L'électronique de bord de la nacelle élévatrice 1 est prévue pour pouvoir mettre en oeuvre une procédure de calibration de manière à pouvoir déterminer la charge à bord de la plate-forme de travail 30. Ensuite, en utilisation, l'électronique de bord peut être prévu pour inhiber le levage de la plate-forme de travail 30 ou limiter la vitesse de levage de celle-ci en fonction de l'importance de la charge à bord de la plate-forme de travail 30 qu'elle détermine sur la base des signaux reçus des capteurs d'effort 41 à 44. En particulier, elle peut être prévue pour inhiber le levage de la plate-forme de travail 30 si la charge excède un premier seuil prédéterminé. Elle peut être prévue pour limiter la vitesse de levage de la plate-forme de travail 30 si la charge excède un deuxième seuil prédéterminé inférieur au premier. Il peut aussi être prévu un affichage sur le pupitre de commande à bord de la plate-forme de travail 30 qui indique le niveau de la charge, par exemple sous la forme d'un bargraphe.

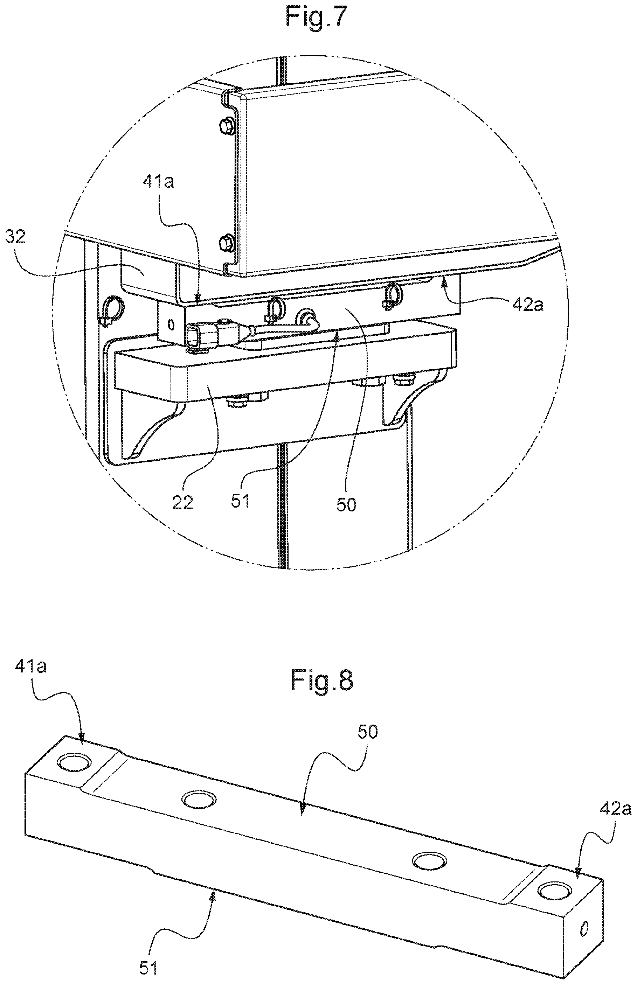

La figure 7 illustre une variante au premier mode de réalisation dans laquelle les capteurs d'effort 41, 42 ont un même premier corps d'épreuve sous forme de barreau et les capteurs d'effort 43, 44 ont un même deuxième corps d'épreuve sous forme de barreau distinct du premier corps d'épreuve. Le corps d'épreuve commun aux capteurs d'effort 41, 42 est référencé 50 sur la figure 7, l'autre n'étant pas visible.

La figure 8 illustre spécifiquement le corps d'épreuve 50 des capteurs d'effort 41, 42, étant précisé que celui des capteurs d'effort 43, 44 est identique.

Comme il est visible, la surface plane de l'interface de support 41a du capteur d'effort 41 est située dans une région d'une première extrémité longitudinale de la face supérieure du barreau tandis que la surface plane de l'interface de support 42a du capteur d'effort 42 est située dans une région d'une deuxième extrémité longitudinale de la face supérieure du barreau, la deuxième extrémité longitudinale étant à l'opposé de la première extrémité longitudinale. Par ailleurs, le barreau présente une surface formant une interface de montage 51 sur la face inférieure du barreau pour monter le barreau sur le support horizontal 22 du caisson 21. Le barreau présente aussi des trous pour la fixation à la poutre 32 du plancher 31 de la plate-forme de travail 30 et au support horizontal 22 du caisson 21 du mât 20.

Le fonctionnement est identique au premier mode de réalisation. Mais cette variante est avantageuse en raison de la mise en position relative des interfaces de support 41a, 42a assurée par le corps d'épreuve 50. De ce fait, la surface supérieure 23 du support horizontal 22 peut être usinée de façon moins précise, voire ne pas être usinée du tout, par rapport au cas où chaque capteur d'effort 41 à 44 à un corps d'épreuve propre.

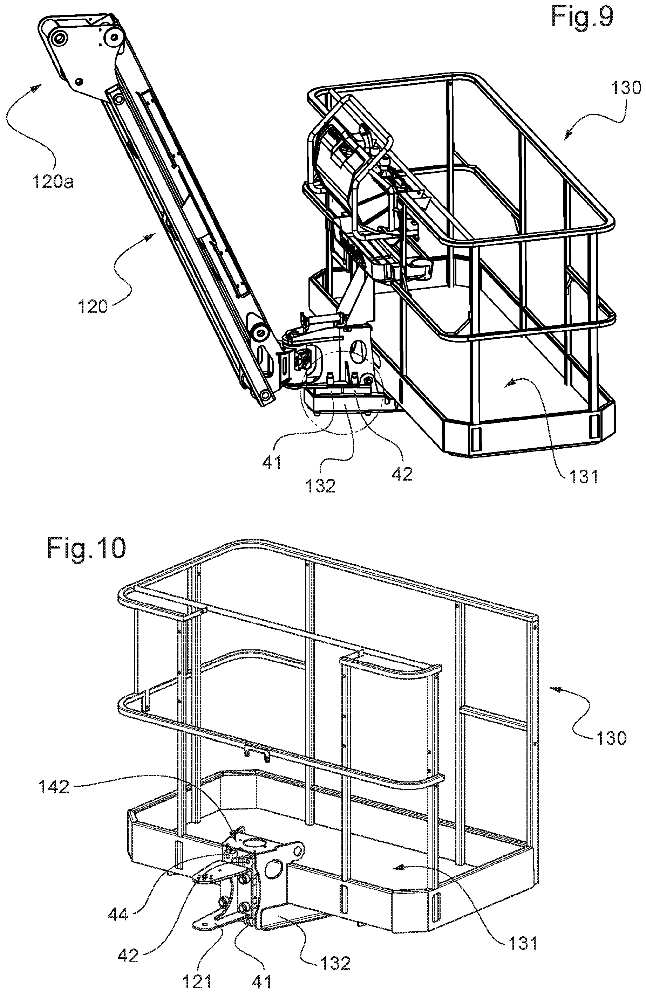

La figure 9 illustre un deuxième mode de réalisation dans lequel la nacelle élévatrice est une nacelle élévatrice à mât télescopique. Dans ce cas, l'angle d'inclinaison du mât - non représenté - par rapport au châssis de la nacelle élévatrice est modifiable. Le mât peut en outre comprendre des tronçons articulés entre eux autour d'un axe horizontal de manière à pouvoir se replier et se déplier. En l'occurrence, la nacelle élévatrice comprend un bras pendulaire 120 qui est articulé par une extrémité 120a à l'extrémité supérieure du mât non représenté. L'autre extrémité du bras pendulaire 120 supporte une plate-forme de travail 130 depuis le milieu d'un côté long de la plate-forme de travail 130 par le biais d'un système de pesage qui est similaire au premier mode de réalisation. Seuls les capteurs d'effort 41, 42 sont visibles sur la figure 9. Cependant, à la différence du premier mode de réalisation, les capteurs d'effort sont placés non pas sous le plancher 131, mais, vue en projection orthogonale sur un plan correspondant au plancher 131 de la plate-forme de travail 130, à l'extérieur du plancher 131. En l'occurrence, chaque paire latérale de capteurs d'effort est montée sur une poutre commune ou une poutre respective supportant le plancher 131 et qui s'étend hors du plancher 131 du côté vers le bras pendulaire 120. Les interfaces de support des capteurs d'effort peuvent être placés, vue en projection orthogonale sur un plan correspondant au plancher 131, aux sommets d'un rectangle ou d'un carré comme dans le premier mode de réalisation. En variante, si chaque paire latérale de capteurs d'effort est placée sur une poutre respective s'étendant en biais par rapport au côté long du plancher 131 au lieu de perpendiculairement, et de manière symétrique l'une par rapport à l'autre, alors un placement des interfaces de support aux sommets d'un trapèze isocèle en correspondance avec la direction d'extension de ces deux poutres est avantageux du point de vue de la simplicité de montage des capteurs d'effort sur ces poutres. Hormis pour ce qui vient d'être mentionné, tout le reste de la description faite du premier mode de réalisation est applicable au deuxième mode de réalisation.

La figure 10 illustre un troisième mode de réalisation qui ne diffère du deuxième mode de réalisation de la figure 9 que par le montage des capteurs d'effort 41 à 44. Ici, les barreaux des capteurs d'effort 41 à 44 s'étendent perpendiculairement au plancher 131 au lieu de parallèlement à celui-ci comme c'était le cas dans le premier mode de réalisation et dans la figure 9. Ainsi, les surfaces planes des interfaces de support des capteurs 41 à 44 s'étendent perpendiculairement au plancher 131 au lieu de parallèlement à celui-ci. Autrement dit encore, lorsque le plancher 131 est en position horizontale, les barreaux des capteurs d'effort 41 à 44, ainsi que les surface planes de leurs interfaces de support, s'étendent verticalement au lieu de horizontalement. Compte tenu du montage des capteurs d'effort en arrière du plancher 131, à l'extérieur de celui-ci, le fait de placer les barreaux perpendiculairement au plancher 131 de la plate-forme de travail 130 procure avantageusement un gain de place entre la plate-forme de travail 130 et l'extrémité du bras pendulaire 120 qui la soutient.

Les modes de réalisation des figures 9 et 10 sont susceptibles de nombreuses variantes. Suivant une première variante, il peut s'agir de nacelles élévatrices à mât télescopique inclinable par rapport au châssis de la nacelle élévatrice, mais qui est dépourvue de bras pendulaire 120. Autrement dit, la plate-forme de travail 130 est supportée directement par l'extrémité supérieure du mât télescopique par le biais des capteurs d'effort.

Suivant une deuxième variante, la nacelle élévatrice est une nacelle élévatrice à mât fixe vertical. Comme dans le cas du premier mode de réalisation, le mât fixe vertical est extensible au moyen d'une pluralité de caissons qui s'emboitent et coulissent entre eux en direction verticale et le mât supporte la plate-forme de travail par le biais du caisson supérieur. Mais à la différence du premier mode de réalisation, la structure élévatrice comprend en outre le bras pendulaire 120 dont une extrémité est articulée au caisson supérieur du mât fixe vertical et une extrémité opposée supporte la plate-forme de travail 130.

Suivant une troisième variante, chaque paire de capteurs d'efforts partagent un même corps d'épreuve comme dans le cas de la variante des figures 7 et 8 décrite pour le premier mode de réalisation.

Plus généralement, la présente invention n'est pas limitée aux exemples et au mode de réalisation décrits et représentés, mais elle est susceptible de nombreuses variantes accessibles à l'homme de l'art.

Ainsi, il est envisageable de recourir à seulement trois capteurs d'effort au lieu de quatre. Par exemple, dans le premier mode de réalisation, les capteurs 42, 44 peuvent être remplacés par un seul capteur d'effort placé entre un support horizontal agencé à l'avant du caisson 21 et une poutre de la structure formant le plancher 31 de la plate-forme de travail 30. Une approche similaire est envisageable pour les deux autres modes de réalisation. Au contraire, il peut aussi être envisagé de recourir à plus de quatre capteurs d'effort. Le recours à quatre capteurs d'effort est cependant privilégié en termes de coût et de qualité du maintien de la plate-forme de travail.

Par ailleurs, si dans les modes de réalisation décrits, les interfaces de support 41a à 44a des capteurs d'effort 41 à 44 servent à supporter la plate-forme de travail tandis que les interfaces de montage 42b ou 50 servent au montage du capteur d'effort sur la structure élévatrice, leur rôle peut être inversé. Autrement dit, pour un, plusieurs ou tous les capteurs d'effort 41 à 44, il peut être prévu que l'interface de support propre serve au support du capteur concerné par la structure élévatrice tandis que son interface de montage 42b ou 50 sert au montage du capteur d'effort à la plate-forme de travail.

## Revendications

1. Nacelle élévatrice (1), comprenant :
- une plate-forme de travail (30 ; 130) comprenant un plancher (31 ; 131) et un garde-corps (35), et
- une structure élévatrice pour déplacer en hauteur la plate-forme de travail (30 ; 130), la structure élévatrice comprenant un mât extensible (20) par le biais duquel est supportée la plate-forme de travail (30 ; 130), la structure élévatrice supportant la plate-forme de travail uniquement par un côté (36) de la plate-forme de travail,
**caractérisée en ce que** la nacelle élévatrice comprend en outre au moins trois capteurs d'effort (41 à 44) interposés entre la structure élévatrice et la plate-forme de travail par le biais desquels la structure élévatrice supporte intégralement le poids de la plate-forme de travail (30 ; 130),
dans laquelle :
- les capteurs d'efforts (41 à 44) sont agencés dans une relation spatiale fixe entre eux,
- les capteurs d'effort (41 à 44) sont disposés de manière que, en projection orthogonale sur un plan correspondant au plancher de la plate-forme de travail, les capteurs d'effort soient tous situés d'un même côté d'une ligne médiane (Y) du plancher (31 ; 131) de la plate-forme de travail qui est celui situé vers le côté (36) de la plate-forme de travail (30 ; 130) par lequel elle est supportée par la structure élévatrice, et
- chacun des capteurs d'effort (41 à 44) est prévu pour mesurer l'effort exercé sur lui uniquement dans la direction verticale par la plate-forme de travail (30 ; 130) lorsque le plancher (31 ; 131) de la plate-forme de travail s'étend horizontalement.

2. Nacelle élévatrice la revendication 1, dans laquelle les capteurs d'effort (41 à 44) sont agencées sous le plancher (31) ou bien, vue en projection orthogonale sur un plan correspondant au plancher (131) de la plate-forme de travail, les capteurs d'effort (41 à 44) sont agencés à l'extérieur du plancher.

3. Nacelle élévatrice selon la revendication 1 ou 2, dans laquelle :
- les capteurs d'effort (41 à 44) ont chacun une interface de support propre (41a à 44a) pour supporter la plate-forme de travail (30 ; 130) ou pour être supporté par la structure élévatrice, et
- chacun des capteurs d'effort (41 à 44) est prévu pour mesurer l'effort exercé uniquement dans la direction verticale par la plate-forme de travail (30 ; 130) sur son interface de support (41a à 44a) lorsque le plancher (31 ; 131) de la plate-forme de travail s'étend horizontalement ou pour mesurer l'effort exercé uniquement dans la direction verticale par son interface de support (41a à 44a) sur la structure élévatrice lorsque le plancher (31 ; 131) de la plate-forme de travail s'étend horizontalement.

4. Nacelle élévatrice selon la revendication 3, dans laquelle :
- les capteurs d'efforts (41 à 44) sont répartis de manière que, dans une projection orthogonale sur un plan, les interfaces de support occupent les sommets d'un polygone, et/ou
- la structure élévatrice supporte la plate-forme de travail (30 ; 130) par le milieu d'un côté de la plate-forme de travail et les capteurs d'effort (41 à 44) ou les interfaces de support (41a à 44a) des capteurs d'effort (41 à 44) sont disposés de manière symétrique par rapport à un plan médian (X) du plancher (31 ; 131) de la plate-forme de travail lequel est perpendiculaire à ladite ligne médiane (Y).

5. Nacelle élévatrice selon la revendication 3 ou 4, dans laquelle :
- l'interface de support (41a à 44a) de chaque capteur d'effort (41 à 44) comprend une surface de support plane, les surfaces de support planes des interfaces de support des capteurs d'effort étant coplanaires, et/ou
- l'interface de support (41a à 44a) de chaque capteur d'effort (41 à 44) comprend une surface de support plane s'étendant parallèlement au plancher (31 ; 131) de la plate-forme de travail ou bien l'interface de support (41a à 44a) de chaque capteur d'effort (41 à 44) comprend une surface de support plane s'étendant perpendiculairement au plancher (131) de la plate-forme de travail.

6. Nacelle élévatrice selon l'une quelconque des revendications 3 à 5, dans laquelle au moins deux des capteurs d'effort (41, 42) sont à base de jauges de contraintes agencées sur ou dans un corps d'épreuve commun (50), l'interface de support (41a, 42a) de chacun de ces deux capteurs faisant partie du corps d'épreuve commun.

7. Nacelle élévatrice selon la revendication 6, dans laquelle le corps d'épreuve commun (50) a une forme de barreau comprenant deux extrémités longitudinales opposées, l'interface de support (41a) de l'un des deux capteurs d'effort étant agencée dans une région vers l'une des extrémités longitudinales et l'interface de support (42a) de l'autre des deux capteurs d'effort étant agencée dans une région vers l'autre extrémité longitudinale.

8. Nacelle élévatrice selon l'une quelconque des revendications 3 à 7, dans laquelle les capteurs d'effort (41 à 44) sont au nombre de quatre, les interfaces de support (41a à 44a) des quatre capteurs d'effort (41 à 44) étant préférentiellement disposées, en projection orthogonale sur un plan, suivant les sommets d'un carré, d'un rectangle ou d'un trapèze isocèle.

9. Nacelle élévatrice selon la revendication 8, dans laquelle :
- deux des capteurs d'effort (41, 42) sont à base de jauges de contraintes agencées sur ou dans un premier corps d'épreuve commun (50) en forme de barreau, l'interface de support (41a, 42a) de chacun de ces deux capteurs (41, 42) faisant parties du premier corps d'épreuve, et
- les deux autres capteurs d'effort (43, 44) sont à base de jauges de contraintes agencées sur ou dans un deuxième corps d'épreuve commun en forme de barreau qui est distinct du premier corps d'épreuve (50), les interfaces de support (43a, 44a) de chacun de ces deux autres capteurs (43, 44) faisant parties du deuxième corps d'épreuve.

10. Nacelle élévatrice selon l'une quelconque des revendications 1 à 9, dans laquelle le mât extensible (20) est un mât fixe vertical, le mât étant extensible au moyen d'une pluralité de caissons qui s'emboitent et coulissent entre eux en direction verticale, le mât supportant la plate-forme de travail par le biais du caisson supérieur auquel la plate-forme de travail est montée rigidement par le biais des capteurs d'effort (41 à 44), la partie supérieure du garde-corps étant de préférence en contact coulissant (35c) contre la paroi verticale du caisson supérieur (21) pour soutenir la plate-forme de travail.

11. Nacelle élévatrice selon la revendication 10, dans laquelle le caisson supérieur (21) du mât présente des supports (22) en saillie sur au moins deux côtés opposés du caisson, les capteurs d'effort (41 à 44) étant fixés sur lesdits supports.

12. Nacelle élévatrice selon la revendication 11 en ce qu'elle dépend de la revendication 9, dans laquelle le premier corps d'épreuve (50) est fixé sur l'un des supports (22) et le deuxième corps d'épreuve est fixé sur l'autre support.

13. Nacelle élévatrice selon la revendication 12, dans laquelle lesdits supports (22) sont horizontaux, les premier et deuxième corps d'épreuve étant placés entre le plancher (31) de la plate-forme de travail et le support horizontal (22) correspondant du caisson supérieur (21) en étant couchés horizontalement entre eux.

14. Nacelle élévatrice selon l'une quelconque des revendications 1 à 9, dans laquelle :
- le mât extensible (20) est un mât fixe vertical, le mât étant extensible au moyen d'une pluralité de caissons qui s'emboitent et coulissent entre eux en direction verticale, le mât supportant la plate-forme de travail par le biais du caisson supérieur, la structure élévatrice comprenant en outre un bras pendulaire (120) dont une extrémité est articulée au caisson supérieur (21) du mât fixe vertical (20) et une extrémité opposée supporte la plate-forme de travail (130) ; ou bien
- le mât extensible est un mât inclinable par rapport à un châssis supportant la structure élévatrice, le mât comprenant optionnellement des tronçons articulées entre eux.

15. Nacelle élévatrice selon l'une quelconque des revendications 1 à 14, dans laquelle :
- la structure élévatrice supporte la plate-forme de travail par un côté étroit (36) de la plate-forme de travail (30), et/ou
- la nacelle élévatrice comprend en outre un dispositif de traitement électronique pour déterminer la charge placée sur la plate-forme à partir des mesures d'effort fournies par les capteurs d'effort (41 à 44).

## Patentansprüche

1. Hubarbeitsbühne (1), umfassend:
- einer Arbeitsplattform (30; 130) mit einem Boden (31; 131) und einem Geländer (35), und
- eine Hebeanordnung zum Bewegen der Arbeitsplattform (30; 130) in der Höhe, wobei die Hebeanordnung einen ausfahrbaren Mast (20) umfasst, über den die Arbeitsplattform (30; 130) gestützt wird, wobei die Hebeanordnung die Arbeitsplattform nur an einer Seite (36) der Arbeitsplattform stützt,
**dadurch gekennzeichnet, dass** die Hubarbeitsbühne ferner mindestens drei Kraftsensoren (41-44) umfasst, die zwischen der Hebeanordnung und der Arbeitsplattform angeordnet sind, über die die Hebeanordnung das Gewicht der Arbeitsplattform (30; 130) vollständig stützt,
wobei:
- die Kraftsensoren (41 bis 44) in einer festen räumlichen Beziehung zueinander angeordnet sind,
- die Kraftsensoren (41 bis 44) so angeordnet sind, dass in orthogonaler Projektion auf eine Ebene, die dem Boden der Arbeitsplattform entspricht, die Kraftsensoren alle auf einer gleichen Seite einer Mittellinie (Y) des Bodens (31; 131) der Arbeitsplattform liegen, die diejenige ist, die zu der Seite (36) der Arbeitsplattform (30; 130) hin liegt, auf der sie von der Hebeanordnung gestützt wird, und
- jeder der Kraftsensoren (41-44) dazu vorgesehen ist, die Kraft zu messen, die von der Arbeitsplattform (30; 130) nur in der vertikalen Richtung auf ihn ausgeübt wird, wenn sich der Boden (31; 131) der Arbeitsplattform horizontal erstreckt.

2. Hubarbeitsbühne nach Anspruch 1, bei welcher die Kraftsensoren (41 bis 44) unter dem Boden (31) angeordnet sind oder, in orthogonaler Projektion auf eine Ebene gesehen, die dem Boden (131) der Arbeitsplattform entspricht, die Kraftsensoren (41 bis 44) außerhalb des Bodens angeordnet sind.

3. Hubarbeitsbühne nach Anspruch 1 oder 2, bei welcher:
- die Kraftsensoren (41 bis 44) jeweils eine eigene Stützschnittstelle (41a bis 44a) zum Stützen der Arbeitsplattform (30; 130) oder um durch die Hebeanordnung gestützt zu werden aufweisen, und
- jeder der Kraftsensoren (41 bis 44) dazu vorgesehen ist, die Kraft zu messen, die nur in der vertikalen Richtung von der Arbeitsplattform (30; 130) auf ihre Stützschnittstelle (41a bis 44a) ausgeübt wird, wenn sich der Boden (31; 131) der Arbeitsplattform horizontal erstreckt, oder die Kraft zu messen, die nur in der vertikalen Richtung von ihrer Stützschnittstelle (41a bis 44a) auf die Hebeanordnung ausgeübt wird, wenn sich der Boden (31; 131) der Arbeitsplattform horizontal erstreckt.

4. Hubarbeitsbühne nach Anspruch 3, bei welcher:
- die Kraftsensoren (41 bis 44) verteilt sind, um in einer orthogonalen Projektion auf eine Ebene die Stützschnittstellen die Ecken eines Polygons besetzen, und/oder
- die Hebeanordnung die Arbeitsplattform (30; 130) durch die Mitte einer Seite der Arbeitsplattform stützt und die Kraftsensoren (41-44) oder die Stützschnittstellen (41a-44a) der Kraftsensoren (41-44) symmetrisch zu einer Mittelebene (X) des Bodens (31; 131) der Arbeitsplattform angeordnet sind, die senkrecht zu der Mittellinie (Y) ist.

5. Hubarbeitsbühne nach Anspruch 3 oder 4, bei welcher:
- die Stützschnittstelle (41a bis 44a) jedes Kraftsensors (41 bis 44) eine ebene Stützfläche umfasst, wobei die ebenen Stützflächen der Stützschnittstellen der Kraftsensoren koplanar sind, und/oder
- die Stützschnittstelle (41a bis 44a) jedes Kraftsensors (41 bis 44) eine ebene Stützfläche umfasst, die sich parallel zum Boden (31; 131) der Arbeitsplattform erstreckt, oder die Stützschnittstelle (41a bis 44a) jedes Kraftsensors (41 bis 44) eine ebene Stützfläche umfasst, die sich senkrecht zum Boden (131) der Arbeitsplattform erstreckt.

6. Hubarbeitsbühne nach einem der Ansprüche 3 bis 5, bei welcher mindestens zwei der Kraftsensoren (41, 42) auf Dehnungsmesselementen basieren, die auf oder in einem gemeinsamen Prüfkörper (50) angeordnet sind, wobei die Stützschnittstelle (41a, 42a) jedes dieser beiden Sensoren Teil des gemeinsamen Prüfkörpers ist.

7. Hubarbeitsbühne nach Anspruch 6, bei welcher der gemeinsame Prüfkörper (50) stabförmig ist und zwei gegenüberliegende Längsenden aufweist, wobei die Stützschnittstelle (41a) eines der beiden Kraftsensoren in einem Bereich zu einem der Längsenden hin angeordnet ist und die Stützschnittstelle (42a) des anderen der beiden Kraftsensoren in einem Bereich zu dem anderen Längsende hin angeordnet ist.

8. Hubarbeitsbühne nach einem der Ansprüche 3 bis 7, bei welcher die Kraftsensoren (41 bis 44) vier an der Zahl sind, wobei die Stützschnittstellen (41a bis 44a) der vier Kraftsensoren (41 bis 44) in orthogonaler Projektion auf eine Ebene vorzugsweise entlang den Eckpunkten eines Quadrats, eines Rechtecks oder eines gleichschenkligen Trapezes angeordnet sind.

9. Hubarbeitsbühne nach Anspruch 8, bei welcher:
- zwei der Kraftsensoren (41, 42) auf Dehnungsmesselementen basieren, die auf oder in einem ersten gemeinsamen stabförmigen Prüfkörper (50) angeordnet sind, wobei die Stützschnittstelle (41a, 42a) jedes dieser beiden Sensoren (41, 42) Teil des ersten Prüfkörpers ist, und
- die beiden anderen Kraftsensoren (43, 44) auf Dehnungsmesselementen basieren, die auf oder in einem zweiten gemeinsamen stabförmigen Prüfkörper angeordnet sind, der von dem ersten Prüfkörper (50) getrennt ist, wobei die Stützschnittstelle (43a, 44a) jedes dieser beiden anderen Sensoren (43, 44) Teil des zweiten Prüfkörpers ist.

10. Hubarbeitsbühne nach einem der Ansprüche 1 bis 9, bei welcher der ausfahrbare Mast (20) ein vertikaler fester Mast ist, wobei der Mast mittels einer Vielzahl von Kästen ausfahrbar ist, die ineinander greifen und in vertikaler Richtung mit Bezug zueinander gleiten, der Mast die Arbeitsplattform mittels des oberen Kasten stützt, an dem die Arbeitsplattform über die Kraftsensoren (41-44) starr angebracht ist, wobei der obere Teil des Geländers vorzugsweise in Gleitkontakt (35c) mit der vertikalen Wand des oberen Kastens (21) steht, um die Arbeitsplattform zu stützen.

11. Hubarbeitsbühne nach Anspruch 10, bei welcher der obere Kasten (21) des Mastes an mindestens zwei gegenüberliegenden Seiten des Kastens vorstehende Halterungen (22) aufweist, wobei die Kraftsensoren (41 bis 44) an den Halterungen befestigt sind.

12. Hubarbeitsbühne nach Anspruch 11 in Abhängigkeit von Anspruch 9, bei welcher der erste Prüfkörper (50) an einer der Halterungen (22) befestigt ist und der zweite Prüfkörper an der anderen Halterung befestigt ist.

13. Hubarbeitsbühne nach Anspruch 12, bei welcher die Halterungen (22) horizontal sind, wobei der erste und der zweite Prüfkörper zwischen dem Boden (31) der Arbeitsplattform und der entsprechenden horizontalen Halterung (22) des oberen Kastens (21) angeordnet sind, indem sie horizontal zwischen ihnen liegen.

14. Hubarbeitsbühne nach einem der Ansprüche 1 bis 9, bei welcher:
- der ausfahrbare Mast (20) ein vertikaler fester Mast ist, wobei der Mast mittels einer Vielzahl von Kästen ausfahrbar ist, die ineinandergreifen und in vertikaler Richtung mit Bezug zueinander gleiten, wobei der Mast die Arbeitsplattform über den oberen Kasten stützt, wobei die Hebeanordnung ferner einen Pendelarm (120) umfasst, dessen eines Ende an dem oberen Kasten (21) des vertikalen festen Mastes (20) angelenkt ist und dessen entgegengesetztes Ende die Arbeitsplattform (130) stützt; oder
- der ausfahrbare Mast ein Mast ist, der in Bezug auf ein Chassis, welches die Hebeanordnung stützt, neigbar ist, wobei der Mast optional aneinander angelenkte Abschnitte umfasst.

15. Hubarbeitsbühne nach einem der Ansprüche 1 bis 14, bei welcher:
- die Hebeanordnung die Arbeitsplattform über eine Schmalseite (36) der Arbeitsplattform (30) stützt, und/oder
- die Hubarbeitsbühne außerdem eine elektronische Verarbeitungsvorrichtung umfasst, um die auf der Plattform platzierte Last anhand der von den Kraftsensoren (41-44) gelieferten Kraftmessungen zu bestimmen.

## Claims

1. An aerial work platform (1), comprising:
- a working platform (30; 130) comprising a floor (31; 131) and a guardrail (35), and
- an elevating structure for moving the working platform (30; 130) in height, the elevating structure comprising an extensible mast (20) via which the working platform (30; 130) is supported, the elevating structure supporting the working platform only by one side (36) of the working platform, and
**characterized in that** the aerial work platform further comprises at least three force sensors (41 to 44) interposed between the elevating structure and the working platform via which the elevating structure fully supports the weight of the working platform (30; 130), wherein:
- the force sensors (41 to 44) are arranged in a fixed spatial relationship to each other,
- the force sensors (41 to 44) are arranged so that, in orthogonal projection on a plane corresponding to the floor of the working platform, the force sensors are all located on the same side of a median line (Y) of the floor (31; 131) of the working platform which is the one located towards the side (36) of the working platform (30; 130) by which it is supported by the elevating structure, and
- each of the force sensors (41 to 44) is adapted to measure the load exerted on it only in the vertical direction by the working platform (30; 130) when the floor (31; 131) of the working platform extends horizontally.

2. An aerial work platform according to claim 1, wherein the force sensors (41 to 44) are arranged under the floor (31) or, viewed in orthogonal projection on a plane corresponding to the floor (131) of the working platform, the force sensors (41 to 44) are arranged outside the floor.

3. An aerial work platform according to claim 1 or 2, wherein:
- the force sensors (41 to 44) each have their own support interface (41a to 44a) for supporting the working platform (30; 130) or for being supported by the elevating structure, and
- each of the force sensors (41 to 44) is adapted to measure the load exerted solely in the vertical direction by the working platform (30; 130) on its support interface (41a to 44a) when the floor (31; 131) of the working platform extends horizontally or to measure the load exerted only in the vertical direction by its support interface (41a to 44a) on the elevating structure when the floor (31; 131) of the working platform extends horizontally.

4. An aerial work platform according to claim 3, wherein:
- the force sensors (41 to 44) are distributed in such a way that, in an orthogonal projection on a plane, the support interfaces occupy the vertices of a polygon, and/or
- the elevating structure supports the working platform (30; 130) from the middle of one side of the working platform and the force sensors (41 to 44) or the support interfaces (41a to 44a) of the force sensors (41 to 44) are arranged symmetrically with respect to a median plane (X) of the floor (31; 131) of the working platform which is perpendicular to said median line (Y).

5. An aerial work platform according to claim 3 or 4, wherein:
- the support interface (41a to 44a) of each force sensor (41 to 44) comprises a planar support surface, the planar support surfaces of the support interfaces of the force sensors being coplanar, and/or
- the support interface (41a to 44a) of each force sensor (41 to 44) comprises a planar support surface extending parallel to the floor (31; 131) of the working platform or the support interface (41a to 44a) of each force sensor (41 to 44) comprises a planar support surface extending perpendicularly to the floor (131) of the working platform.

6. An aerial work platform according to any one of claims 3 to 5, wherein at least two of the force sensors (41, 42) are based on strain gauges arranged on or in a common test body (50), the support interface (41a, 42a) of each of these two sensors being part of the common test body.

7. An aerial work platform according to claim 6, wherein the common test body (50) has a bar shape comprising two opposite longitudinal ends, the support interface (41a) of one of the two force sensors being arranged in a region towards one of the longitudinal ends and the support interface (42a) of the other of the two force sensors being arranged in a region towards the other longitudinal end.

8. An aerial work platform according to any one of claims 3 to 7, wherein the force sensors (41 to 44) are four in number, the supporting interfaces (41a to 44a) of the four force sensors (41 to 44) being preferably arranged, in orthogonal projection on a plane, along the vertices of a square, rectangle or isosceles trapezium.

9. An aerial work platform according to claim 8, wherein:
- two of the force sensors (41, 42) are based on strain gauges arranged on or in a common first bar-shaped test body (50), the support interface (41a, 42a) of each of these two sensors (41, 42) being part of the first test body, and
- the two other force sensors (43, 44) are based on strain gauges arranged on or in a common second bar-shaped test body separate from the first test body (50), the support interfaces (43a, 44a) of each of these two other sensors (43, 44) being part of the second test body.

10. An aerial work platform according to any one of claims 1 to 9, wherein the extensible mast (20) is a vertical fixed mast, the mast being extensible by means of a plurality of boxes which fit together and slide vertically between them, the mast supporting the working platform via the upper box to which the working platform is rigidly mounted by means of force sensors (41 to 44), the upper part of the guardrail being preferably in sliding contact (35c) against the vertical wall of the upper box (21) to support the working platform.

11. An aerial work platform according to claim 10, wherein the upper box (21) of the mast has supports (22) projecting on at least two opposite sides of the box, the force sensors (41 to 44) being fixed to said supports.

12. An aerial work platform according to claim 11 in that it is dependent on claim 9, wherein the first test body (50) is fixed to one of the supports (22) and the second test body is fixed to the other support.

13. An aerial work platform according to claim 12, wherein said supports (22) are horizontal, the first and second test bodies being placed between the floor (31) of the working platform and the corresponding horizontal support (22) of the upper box (21) by lying horizontally between them.

14. An aerial work platform according to any of claims 1 to 9, wherein:
- the extensible mast (20) is a vertical fixed mast, the mast being extensible by means of a plurality of boxes which fit together and slide vertically between them, the mast supporting the working platform via the upper box, the elevating structure further comprising a pendular arm (120) one end of which is articulated to the upper box (21) of the vertical fixed mast (20) and an opposite end supports the working platform (130); or
- the extensible mast is a mast tiltable with respect to a chassis supporting the elevating structure, the mast optionally comprising articulated sections.

15. An aerial work platform according to any one of claims 1 to 14, wherein:
- the elevating structure supports the working platform by a narrow side (36) of the working platform (30), and/or
- the aerial work platform further comprising an electronic processing device for determining the load placed on the platform from the force measurements provided by the force sensors (41 to 44) .
